# EUROPEAN PATENT APPLICATION

(11) **EP 4 545 324 A1**
(43) Date of publication of application: **30.04.2025**
(21) Application number: 24207746.9
(22) Date of filing: 21.10.2024
(51) Int. Cl.: B60J 7/185

(54) **ROOF ASSEMBLY FOR A CONVERTIBLE MOTOR VEHICLE**

(30) Priority: 23.10.2023 IT 202300022092
(71) Applicant: FERRARI S.p.A., 41100 Modena (IT)
(72) Inventor: CARRIERO, Dario, 41100 MODENA (IT); MARLIER, Renaud, 41100 MODENA (IT); SALVADOR, Manuel, 41100 MODENA (IT); SORRENTINO, Giuseppe, 41100 MODENA (IT)
(74) Representative: Studio Torta S.p.A.

(57) **Abstract**

A roof assembly (3) for a convertible motor vehicle (1) includes a roof frame (2) adapted to be part of a chassis of the motor vehicle (1), a removable roof portion (4) configured to be arranged in contact with the roof frame (2) in an attachment position, a lock device (5) carried by the roof portion (4) and configured to be operated when the roof portion (4) is in the attachment position according to a first operation mode, according to which the lock device (5) cooperates with the roof frame (2), thereby realizing a constraint to secure the roof portion (4) to the roof frame (2) in the attachment position, and according to a second operation mode, according to which the lock device (5) recedes from cooperating with the roof frame (2), thereby removing said constraint, characterized by further comprising a magnetic device configured to generate a magnetic field, the magnetic field being variable according to the operation of the lock device (5) when the roof portion (4) is in the attachment position, a magnetic field transducer (10) configured to detect the magnetic field at least when the roof portion (4) is in the attachment position and to output a signal according to the detected magnetic field, and a control unit (11) coupled to the transducer (10) and configured to extract from the signal a piece of information associated with the presence of the roof portion (4) in the attachment position and/or with the presence of said constraint.

## Description

### CROSS-REFERENCE TO RELATED APPLICATIONS

This patent application claims priority from Italian patent application no. 102023000022092 filed on October 23, 2023, the entire disclosure of which is incorporated herein by reference.

### FIELD OF THE ART

The invention relates to a roof assembly for a convertible motor vehicle.

### PRIOR ART

As is known, a convertible motor vehicle is a motor vehicle which can be driven with or without a roof covering the passenger compartment.

In other words, the roof of the motor vehicle can be removed from a closed roof position, in which the roof covers the passenger compartment.

When a user of the convertible motor vehicle wants the passenger compartment to be covered by the roof, the user must bring the roof to the closed roof position and secure the roof to an upper frame portion of the motor vehicle.

In particular, the convertible motor vehicle has one or more fixing devices which can be used by the user to secure the roof to the frame portion after the roof has been brought into the closed roof position.

Often, the fixing devices operate exclusively in manual mode.

In general, the need is felt to increase the security with which the roof is secured to the frame portion.

In fact, a failure to attach the roof to the roof portion could cause extensive damage during the use of the convertible motor vehicle.

More in particular, the need is felt for an active determination, in a simple manner and with a reasonable degree of certainty, of the actual state of attachment of the roof to the frame portion.

An aim of the invention is to meet at least one of the above requirements.

### DISCLOSURE OF THE INVENTION

The aim is achieved by a roof assembly as defined in claim 1.

The dependent claims define particular embodiments of the invention.

### BRIEF DESCRIPTION OF THE DRAWINGS

In the following, an embodiment of the invention is described for a better understanding thereof by way of non-limiting example and with reference to the accompanying drawings, wherein:
- Figure 1 is a perspective view of a convertible motor vehicle comprising a roof assembly according to the invention,

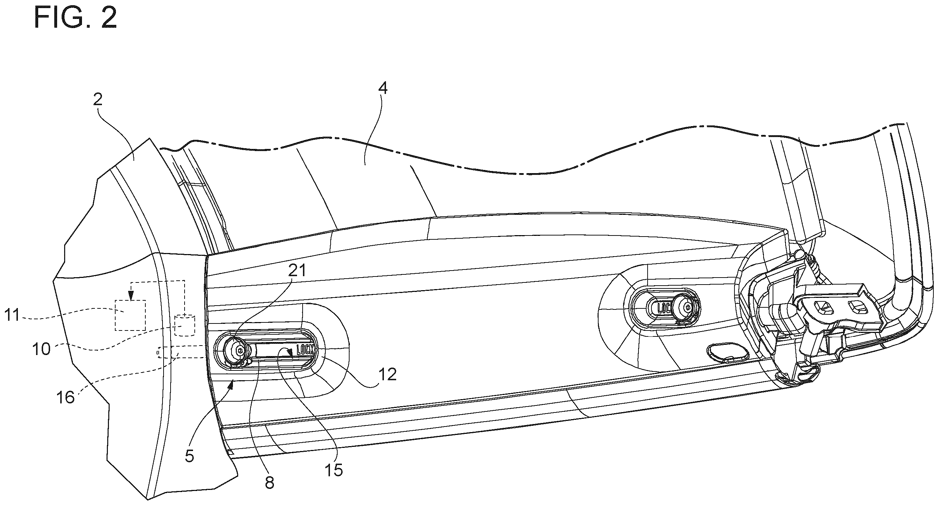

- Figure 2 is a perspective view, in an enlarged scale, of an internal portion of the roof assembly, and
- Figures 3, 4, 5 are schematic depictions of respective distinct operating configurations of the roof assembly.

### EMBODIMENTS OF THE INVENTION

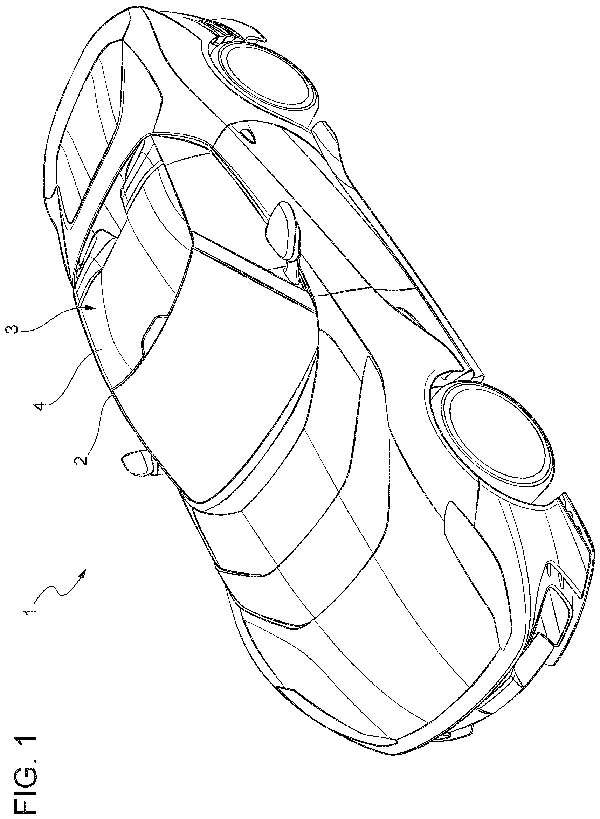

In Figure 1, reference number 1 is used to denote a convertible motor vehicle as a whole.

Like all motor vehicles, motor vehicle 1 has a normal direction of travel and comprises a passenger compartment to accommodate at least one driver and optionally one or more passengers.

Motor vehicle 1 comprises a chassis and a body carried by the chassis, such that the chassis and body define or surround, as a whole, the passenger compartment, in particular selectively separating, inter alia, the passenger compartment from the exterior of motor vehicle 1.

Furthermore, motor vehicle 1 comprises a roof assembly 3 comprising, in turn, a roof frame 2, e.g., forming part of the aforementioned chassis or otherwise coupled thereto, in particular fixedly, and a roof or roof portion 4 which is selectively removable or attachable to roof frame 2, so as to define an upper covering of the passenger compartment, i.e., a roof panel in automotive jargon.

More precisely, roof 4 is configured to be arranged in contact with roof frame 2 or, rather, with a portion thereof defining the outline of an opening configured to be closed or entirely occupied by roof 4.

Roof 4 can be arranged in contact with roof frame 2 in at least one attachment position, which is suitable for constraining roof 4 to roof frame 2.

More precisely, roof 4 can be releasably fixed to roof frame 2, at least in the attachment position.

Clearly, the attachment position can be a specific relative position between roof 4 and roof frame 2.

Roof 4 could comprise or be a panel or sheet metal. Furthermore, roof 4 could be substantially rigid. Roof 4 could also be different from a panel or sheet metal; roof 4 could also be flexible or comprise a fabric, without any loss of generality.

The arrangement of roof 4 in the attachment position is clearly not sufficient to secure roof 4 to roof frame 2.

In fact, the mere arrangement of roof 4 in the attachment position indeed results in contact between roof 4 and roof frame 2, so that roof 4 can at least be maintained in the closed roof position by friction, but the friction does not result in a truly stable or reliable constraint.

Thus, the term constraint or the verb to constrain is understood herein with the meaning of a stable constraint or to create a stable constraint, viz., a constraint which can only be broken by a breakage of the components realizing the constraint.

To constrain or secure roof 4 to roof frame 2, assembly 3 comprises at least one lock device 5 configured to be operated, in particular manually, when roof 4 is arranged in the attachment position.

Device 5 is carried by roof 4. In more detail, device 5 has at least one structure 6 which is carried by roof 4 in a fixed position; viz., structure 6 is fixed with respect to roof 4.

Device 5 has two operation modes. A first operation mode consists of securing or constraining, specifically manually, roof 4 to roof frame 2 in the attachment position.

In this operation mode, device 5 cooperates or more in particular comes or is manually brought into contact with roof frame 2 and consequently realizes or exerts a constraining action or more simply a constraint to secure or constrain roof 4 to roof frame 2 in the attachment position.

On the other hand, a second operation mode is opposite with respect to the first operation mode and consists of removing the constraining action so that roof 4 can be removed from motor vehicle 1. In other words, device 5 manually recedes or is made to recede from cooperating or more in particular from contact with roof frame 2, such that device 5 ceases to exert the constraining action.

In more detail, device 5 comprises at least one latch 8, in this case a plurality of latches 8, in particular at least four latches 8 arranged in pairs at the front and rear ends of roof 4, more precisely at the four corners of roof 4.

Here and below, terms such as front and rear may be interpreted with reference to the direction of travel of motor vehicle 1 or to identify a suitable orientation for positioning and/or mounting with respect to motor vehicle 1.

Latches 8 are preferably the same, meaning that the characteristics described for one latch 8 are applicable to all the others. Therefore, the description will only refer to a latch 8.

Latch 8 comprises a guide body 12 fixed with respect to roof 4, in particular fixed thereto, more in particular by means of known threaded members.

Guide body 12 extends along an axis A, which is in particular straight and more in particular parallel to the direction of travel of motor vehicle 1.

Furthermore, guide body 12 has a hole 14 extending along axis A; in particular, hole 14 is a through hole.

Furthermore, specifically, guide body 12 has a slot 15 formed deep along a transversal axis or more precisely orthogonal to axis A up to communicating with hole 14.

Latch 8 further comprises a pin 16 coupled to guide body 12 in a sliding manner along axis A within hole 14.

In other words, pin 16 is inserted in hole 14, which allows pin 16 to slide along axis A with respect to guide body 12. Guide body 12 therefore has the function of guiding the sliding of pin 16 along axis A.

Furthermore, latch 8 comprises a knob 21 which is fixed with respect to pin 16 and protruding with respect to guide body 12 along axis B through slot 15.

Thereby, the user can use knob 21 to move pin 16 along axis A, at least between two latch positions, particularly when roof 4 is in the attachment position.

The latch positions include a closed position, in which roof 4 is secured to roof frame 2 in the attachment position, and an open position, in which latch 8 exerts no constraining action between roof 4 and roof frame 2.

Thus, in general, pin 16 is coupled to guide body 12 in a sliding manner along axis A within hole 14 between the latch positions.

Roof frame 2 has a pin seat, e.g., a hole formed on roof frame 2. Pin seat is arranged to receive pin 16 when roof 4 is arranged in the attachment position.

Pin 16 is configured to engage and disengage the pin seat when in the closed position and open position, respectively.

The engagement of pin 16 in the pin seat realizes the constraining action.

In the open position, pin 16 is outside the pin seat, whereby it does not cooperate or ceases to cooperate therewith to realize the first constraining action.

Therefore, more in general, pin 16 defines a particular type of movable mechanical member of lock device 5, which could have had different geometries and/or movement capabilities from pin 16, while maintaining the same function.

The mechanical member is therefore movable between two positions respectively corresponding to the operation modes described above and is, in addition, configured to exert or realize the constraining action which in turn realizes the constraint in the position corresponding to the first operation mode.

In addition, assembly 3 comprises a magnetic device configured to generate a variable magnetic field based on the operation of lock device 5, in particular when roof 4 is in the attachment position.

According to an embodiment, pin 16 or more in general the movable mechanical member is magnetized, so as to comprise a magnet, in particular a permanent one. Here, pin 16 or movable mechanical member comprises the magnetic device.

Therefore, pin 16 itself emits a magnetic field, which is variable at least for its position with respect to roof frame 2, based on the operation of lock device 5.

In fact, the magnetic field shifts with respect to roof frame 2 with the stroke of pin 16 between the latch positions corresponding to the two possible operation modes of latch 5 in the attachment position of roof 4.

This means that the magnetic field intensity at a specific point of roof frame 2 will vary depending on the position of roof 4 with respect to roof frame 2 and, in the attachment position, depending on the position of pin 16.

In fact, the distance between the specific point and pin 16 will vary with the position of pin 16, whereby the specific point will be subject to a variable magnetic field intensity depending on the position of pin 16, viz., depending on the operation of lock device 5.

According to another embodiment, the magnetic device is carried by roof frame 2 in a fixed position and in particular comprises a magnet, more in particular a permanent one.

In this embodiment, unlike the previous embodiment, pin 16 or the movable member may not be magnetized, i.e., it may lack magnets.

Here, the magnetic device is arranged in a position of roof frame 2 such that the emitted magnetic field reaches pin 16 or the movable member at least in the first operation mode of lock device 5, or more preferably reaches pin 16 or the movable member when roof 4 is in the attachment position, regardless of the actual position of pin 16 or of the movable member.

Thereby, the magnetic field is disturbed by pin 16 or by the movable member in a variable manner depending on the position of pin 16 or the movable member, viz., depending on the operation of lock device 5.

Instead, with roof 4 far away from roof frame 2, the magnetic field is not disturbed by pin 16 or by the movable member.

Thus, the magnetic field is variably disturbed depending on whether or not roof 4 is in the attachment position and on the position of pin 16 or the movable member when roof 4 is in the attachment position.

Assembly 3 further comprises a magnetic field transducer 10 configured to detect the magnetic field or more precisely its intensity or the variation of its intensity (the intensity value or intensity variation) at least when roof 4 is in the attachment position.

Transducer 10 is further configured to output a signal depending on the detected magnetic field, viz., depending on the magnetic field intensity detected.

Transducer 10 is fixed in particular to roof frame 2.

According to one of the described embodiments, in particular that with the magnetic device fixed to roof frame 2, transducer 10 could comprise the magnetic device or its magnet, or the magnetic device and transducer 10 have a fixed relative arrangement, i.e., they are fixed with respect to each other in a fixed relative position.

Preferably, transducer 10 is a Hall effect transducer.

In the first operation mode of lock device 5, transducer 10 is facing the movable member or pin 16.

In the second operation mode, with roof 4 in the attachment position, the movable member or pin 16 is farther away from transducer 10 with respect to the first operation mode.

Clearly, when roof 4 is removed from motor vehicle 1, the movable member or pin 16 is even farther away from transducer 10.

The position of roof 4 and pin 16 with respect to transducer 10 determines the signal output by transducer 10, as it in particular determines the intensity or intensity variation of the magnetic field to which transducer 10 is subjected, both in the case where pin 16 disturbs the magnetic field emitted by the magnetic device, and all the more so in the case where the magnetic field is emitted by pin 16 itself.

Furthermore, assembly 3 comprises a control unit 11 coupled to transducer 10 and configured to extract from the signal output by transducer 10 a piece of information associated with the detected magnetic field.

The information is associated with (or indicative of) the presence of roof 4 in the attachment position and/or the presence of the constraining action exerted by lock device 5.

In fact, the signal from which the information is extracted indicates the intensity or intensity variation of the magnetic field undergone by transducer 10.

The intensity or its variation is influenced by the presence of roof 4 in the attachment position and/or the presence of the constraining action, viz., the operation of lock device 5 or more specifically by the position of the movable member or pin 16.

Therefore, control unit 11 will extract the information on the presence of roof 4 and/or the constraining action or more simply the constraint from the signal output by transducer 10.

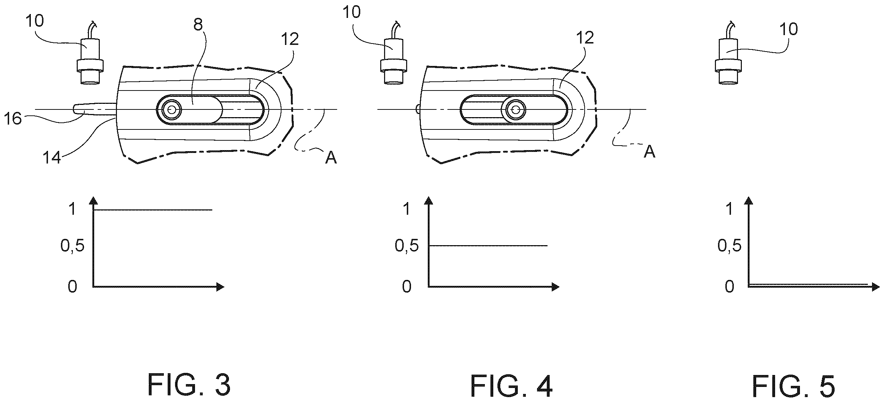

The examples in Figures 3, 4, 5 show the distinct detections of transducer 10 in the two operation modes of lock device 5 and, additionally, when roof 4 is removed from the attachment position, respectively.

In Figure 3, the magnetic field (viz., its intensity) detected by transducer 10 is maximum (this is indicated in Figure 3 by the illustrative, non-limiting value 1), as pin 16 is closer to transducer 10, with roof 4 in the attachment position (first operation mode of lock device 5 - constraining action or constraint present).

In Figure 4, the magnetic field (viz., its intensity) detected by transducer 10 is weakened (this is indicated in Figure 4 by the illustrative and non-limiting value 0.5), as pin 16 is farther away from transducer 10, with roof 4 in the attachment position (second operation mode of lock device 5 - constraining action or no constraint).

In Figure 5, the magnetic field detected by the transducer is zero, as roof 4 is absent from motor vehicle 1.

Therefore, transducer 10 outputs differentiated signals when roof 4 is present in the attachment position or absent from the latter, respectively.

Similarly, although independently, transducer 10 outputs different signals respectively when lock device 5 is operated according to the first or second operation mode, with roof 4 in the attachment position.

Therefore, control unit 11 can determine from the signal output by transducer 10 whether roof 4 is in the attachment position and/or the operation mode of lock device 5.

Preferably, control unit 11 is configured to output an alert signal when the information extracted from the signal output by transducer 10 is indicative of the presence of roof 4 in the attachment position and an absence of the constraining action (second operation mode of lock device 5), as in the case of Figure 4.

In fact, the condition in Figure 4 represents a serious danger of separation of roof 4 from roof frame 2 during the use of motor vehicle 1.

The alert signal can be of various types, such as light signals, sound signals, and the like.

Furthermore, preferably, control unit 11 can be configured to change the settings in a differentiated manner of an air conditioning apparatus and/or a sound emitting apparatus of motor vehicle 1, viz., for example a stereo system or a car radio of motor vehicle 1, depending on the information extracted. The settings of the stereo system relate in particular to the volume of the music emitted.

In more detail, control unit 11 sets a first setting for the air conditioning apparatus and/or the sound emitting apparatus when the extracted piece of information indicates the presence of the constraining action (passenger compartment closed above - first operation mode of lock device 5), as in the case of Figure 3.

Control unit 11 instead sets a second setting for the air conditioning apparatus and/or the sound emitting apparatus when the extracted piece of information indicates the absence of roof 4 from the attachment position (passenger compartment open above), as in the case of Figure 5.

The first and second setting are different or distinct from each other.

For example, the power of the air conditioning apparatus and/or the sound emitting volume of the sound emitting apparatus can be set lower with the first setting with respect to the second setting.

From the above, the advantages of assembly 3 according to the invention are clear.

In fact, transducer 10 allows to determine with certainty the presence of roof 4 in the attachment position and also, more in particular, the actual attachment of roof 4 to roof frame 2 by means of lock device 5.

This occurs thanks to only transducer 10 and the magnetic device, so that assembly 3 is essentially very simple, but not unreliable.

Furthermore, the coupling of transducer 10 to control unit 11 allows the exploitation of the information coming from the signal output by transducer 10 for setting apparatuses of motor vehicle 1, such as the air conditioning apparatus and the sound emitting apparatus.

Finally, it is clear that modifications and variations can be made to assembly 3 according to the invention without, however, departing from the scope of protection defined by the claims.

In particular, the number and shape of the components described and illustrated could be different and in particular varied with great freedom.

Furthermore, terms such as first and second are only used for the sake of clarity and must not be understood with a limiting meaning.

The embodiments described can eventually be combined to form further embodiments, which remain, however, within the scope of the claims.

## Claims

1. Roof assembly (3) for a convertible motor vehicle (1), the assembly (3) comprising
- a roof frame (2) adapted to be part of a chassis of the motor vehicle (1)
- a removable roof portion (4) configured to be arranged in contact with the roof frame (2) in an attachment position suitable for constraining the roof portion (4) to the roof frame (2),
- a lock device (5) carried by the roof portion (4) and configured to be operated when the roof portion (4) is in the attachment position according to a first operation mode, according to which the lock device (5) cooperates with the roof frame (2), thereby realizing a constraint to secure the roof portion (4) to the roof frame (2) in the attachment position, and according to a second operation mode, according to which the lock device (5) recedes from cooperating with the roof frame (2), thereby removing said constraint,
**characterized by** further comprising
- a magnetic device configured to generate a magnetic field, the magnetic field being variable according to the operation of the lock device (5) when the roof portion (4) is in the attachment position,
- a magnetic field transducer (10) configured to detect the magnetic field at least when the roof portion (4) is in the anchor position and to output a signal according to the detected magnetic field, and
- a control unit (11) coupled to the transducer (10) and configured to extract from the signal a piece of information associated with the presence of the roof portion (4) in the attachment position and/or with the presence of said constraint.

2. The roof assembly according to claim 1, wherein the transducer (10) is carried by the roof frame (2) in a fixed position.

3. The roof assembly according to claim 1 or 2, wherein the lock device (5) comprises at least one movable mechanical member (16) between a first and a second position corresponding to the first and second operation modes respectively, the mechanical member (16) being configured to exert a constraining action realizing said constraint in the first position.

4. The roof assembly according to claim 3, wherein the mechanical member (16) comprises the magnetic device.

5. The roof assembly according to claim 3, wherein the magnetic device is carried by the roof frame (2) in a fixed position.

6. The roof assembly according to any one of claims 3 to 5, wherein the lock device (5) comprises at least one latch (8) comprising
- a guide body (12) fixed with respect to the roof portion (4), extending along an axis (A), and having a hole (14) along the axis (A), and
- a pin (16) comprising the mechanical member, coupled to the guide body (12) in a sliding manner along the axis (A) within the hole (14) between two latch positions and configured respectively to engage and disengage a pin seat formed on the roof frame (2) when in either of said two latch positions, so that the engagement of the pin (16) in the pin seat realizes said constraint.

7. The roof assembly according to claim 6, wherein the latch (8) further comprises a knob (21) fixed with respect to the pin (16) and protruding with respect to the guide body (12) along a direction transversal to said axis (A) through a slot (15) formed on the guide body (12) and communicating with the hole (14), the knob (21) being suitable for being grasped to move the pin (16) between the two latch positions (8).

8. The roof assembly according to any one of the preceding claims, wherein the control unit (11) is configured to issue an alert signal when the extracted piece of information is indicative of the presence of the roof portion (4) in the attachment position and an absence of said constraint.

9. A convertible motor vehicle (1) comprising a roof assembly (3) according to any one of the preceding claims.

10. The motor vehicle according to claim 9, comprising at least one apparatus between an air conditioning apparatus and a sound emitting apparatus, wherein the control unit (11) is configured to set a first and a second setting of the apparatus, the first and second settings being distinct from each other, respectively, when the extracted piece of information indicates a presence of said constraint and an absence of the roof portion (4).
